# EUROPÄISCHE PATENTSCHRIFT

(11) **EP 3 285 592 B1**
(45) Veröffentlichungstag und Bekanntmachung des Hinweises auf die Patenterteilung: **23.09.2020**
(21) Anmeldenummer: 16714884.0
(22) Anmeldetag: 06.04.2016
(51) Int. Cl.: A22C 25/08, A22C 25/16

(54) **VORRICHTUNG UND VERFAHREN ZUM AUTOMATISCHEN GEWINNEN VON FLEISCH VON GEKÖPFTEN UND ENTWEIDETEN FISCHEN**
MACHINE AND METHOD FOR AUTOMATIC REMOVING OF MEAT FROM BEHEADED AND EVISCERATED FISHES
MACHINE ET PROCÉDÉ POUR PRÉLEVER DE FAÇON AUTOMATIQUE LA CHAIR DE POISSONS DÉCAPITÉS ET ÉVIDÉS

(30) Priorität: 20.04.2015 DE 102015106010
(43) Veröffentlichungstag der Anmeldung: 28.02.2018
(73) Patentinhaber: Nordischer Maschinenbau Rud. Baader GmbH + Co. KG, 23560 Lübeck (DE)
(72) Erfinder: FINKE, Hans, 23552 Lübeck (DE); JÜRS, Michael, 23730 Neustadt (DE); GRABAU, Thomas, 23564 Lübeck (DE)
(74) Vertreter: Stork Bamberger Patentanwälte PartmbB
(86) Internationale Anmeldenummer: PCT/EP2016/057505
(87) Internationale Veröffentlichungsnummer: WO 2016/169767

(56) Entgegenhaltungen:
- DE-B1- 2 833 097
- DE-B1- 2 833 097
- DE-C1- 19 881 497
- DE-C1- 19 881 497
- DE-T2- 60 311 815
- DE-T2- 60 311 815
- US-A- 2 479 010
- US-A- 2 479 010

## Beschreibung

Die Erfindung betrifft eine Vorrichtung zum automatischen Gewinnen von Fleisch von geköpften und entweideten Fischen, umfassend eine Transporteinrichtung zum Transportieren der Fische Schwanz voraus in horizontaler Transportrichtung T entlang eines Transportpfads sowie eine Trenneinrichtung zum Trennen des Fleisches vom Grätengerüst, wobei die Trenneinrichtung mindestens zwei rotierend antreibbare und steuerbare Kreismesser aufweist, die auf einander gegenüberliegenden Seiten des Transportpfads zur Bildung eines Spalts S beabstandet zueinander angeordnet sind.

Des Weiteren betrifft die Erfindung ein Verfahren zum automatischen Gewinnen von Fleisch von geköpften und entweideten Fischen, umfassend die Schritte: Transportieren der Fische Schwanz voraus in horizontaler Transportrichtung T entlang eines Transportpfads mittels einer Transporteinrichtung, und Trennen des Fleisches vom Grätengerüst mittels einer Trenneinrichtung, wobei das Trennen durch zwei rotierend angetriebene Kreismesser der Trenneinrichtung erfolgt, die auf einander gegenüberliegenden Seiten des Transportpfads zur Bildung eines Spalts S beabstandet zueinander angeordnet sind und gesteuert werden.

Solche Vorrichtungen und Verfahren kommen in der fischverarbeitenden Industrie zum Einsatz, um das Fleisch oder mindestens Teile davon von geköpften und mindestens teilweise bzw. überwiegend entweideten Fischen zu gewinnen. Anders ausgedrückt sind die erwähnten Vorrichtungen und Verfahren Grundlage bzw. Bestandteil der Filetgewinnung bei Fischen. Dazu werden die Fische automatisch bauchseitig und/oder rückenseitig bearbeitet, indem das am Grätengerüst anliegende Fleisch von diesem durch Trenneinrichtungen gelöst und getrennt wird. Die Fische werden mittels der Transporteinrichtung Schwanz voraus an die bzw. durch die einzelnen Bearbeitungsstationen hindurch transportiert.

In der DE 198 81 497 C1 ist eine Vorrichtung mit den Merkmalen des Oberbegriffes des Anspruchs 1 beschrieben. Diese Vorrichtung weist eine Einstellmöglichkeit der Kreismesser auf, um die Neigung der Kreismesser bei der Einrichtung der Vorrichtung zueinander variabel einstellen zu können. Dazu sind die Kreismesser um eine im Wesentlichen horizontal gerichtete Achse A, B schwenkbar bzw. kippbar. In Transportrichtung T der Fische gesehen können die Kreismesser somit aus einer parallelen Anordnung, bei der die Kreismesser an jedem Punkt des Umfangs den gleichen Abstand zueinander aufweisen, in eine V-förmige Position, bei der die Kreismesser beispielsweise an ihrem tiefsten Messerpunkt den geringsten Abstand zueinander aufweisen, und zurück geschwenkt bzw. gekippt werden. Das bedeutet, dass der Messerwinkel, also der Winkel beider Kreismesser zueinander, variabel ist. Es besteht jedoch der Nachteil, dass der Abstand a der beiden Kreismesser im Bereich des geringsten Spaltabstandes, üblicherweise am tiefsten Messerpunkt M der beiden Kreismesser, auf ein festes, für unterschiedliche Fischgrößen passendes Mindest-Spaltmaß einzustellen ist. Mit anderen Worten ist die Stellung/Ausrichtung der Kreismesser zueinander während des Trenn- bzw. Schneidvorgangs bezogen auf die Lage des Punktes des geringsten Abstandes unveränderlich. Einerseits ist ein möglichst geringes Spaltmaß für eine maximale Ausbeute anzustreben. Für das verletzungsfreie Freischneiden des Fleisches ohne Flossenreste bzw. Flossenhalterreste bzw. Flossensäume ist anderseits ein möglichst großes Spaltmaß vorzuziehen. Die einmal eingestellte Größe des Abstands bzw. Spaltmaßes, das üblicherweise ca. 5mm beträgt, sowie die einmal eingestellte Stellung/Ausrichtung der Kreismesser zueinander stellen einen Kompromiss zwischen einer möglichst hohen Ausbeute auf der einen Seite und der Vermeidung von Fehlschnitten auf der anderen Seite dar. Mit dem durch die bekannte Vorrichtung gefundenen Kompromiss einer fest eingestellten Stellung/Ausrichtung der Kreismesser zueinander verbunden mit der Möglichkeit der Abstandsveränderung zwischen den Kreismessern sowie der Neigungsverstellung um eine horizontale Achse können beide Ziele jeweils nur teilweise erreicht werden.

Die DE 603 11 815 T2 beschreibt eine Vorrichtung zum Filetieren von Fischfilets, bei der die Fische Kopf voraus transportiert werden. Die Kreismesser dieser Vorrichtung sind um eine Achse aus einer Warteposition in eine Betriebsposition und umgekehrt schwenkbar. Durch das Schwenken ist der Abstand der beiden Kreismesser veränderbar.

US2497010A gehört ebenfalls zum Stand der Technik.

Bei verschiedenen Fischarten entstehen durch die bekannten Vorrichtungen und Verfahren aufgrund der fixen Ausrichtung/Stellung der Kreismesser zueinander in Bezug auf die Lage des Punktes des geringsten Abstandes während der Fleischgewinnung besonders große Ausbeuteverluste und/oder Verletzungen von Flossen/Flossenhaltern/Flossensäumen. Diese Problematik betrifft beispielsweise Weißfisch und insbesondere Kabeljau, bei dem die Hauptgräte eine sich vom Schwanz zum Kopf hin veränderliche Form aufweist. Durch die starre Kreismesserausrichtung bezogen auf die Lage des Punktes des kleinsten Spaltmaßes kommt es zu Fehlschnitten und/oder Ausbeuteverlusten im Bereich der Hauptgräte. Bei anderen Fischarten, z.B. beim Lachs, befinden sich im Bereich der Hauptgräte (die im Folgenden auch Mittel- oder Rückengräte genannt wird) insbesondere im Bereich zwischen Schwanz und Rückenflosse besonders fleischhaltige Bereiche, die mit den bekannten Vorrichtungen und Verfahren nur unbefriedigend geerntet werden können. Aus den genannten Gründen existieren daher nach der Bearbeitung mit der bekannten Vorrichtung bzw. den bekannten Verfahren im Bereich der Rückengräte Abschnitte, die aus reinem Fleisch bestehen, wenn die Ausrichtung der Kreismesser auf eine sichere, Fehlschnitte vermeidende Stellung eingestellt ist. Sind die Kreismesser dagegen auf eine ausbeuteoptimierte Ausrichtung eingestellt, kann es zu Fehlschnitten kommen.

Der Erfindung liegt somit die Aufgabe zugrunde, eine Vorrichtung zu schaffen, mittels der ein ausbeuteeffizienteres und gleichzeitig Flossenhalterverletzungen vermeidendes Trennen/Gewinnen von Fleisch realisiert werden kann. Die Aufgabe der Erfindung liegt des Weiteren darin, ein entsprechendes Verfahren vorzuschlagen.

Diese Aufgabe wird durch eine Vorrichtung mit den eingangs genannten Merkmalen dadurch gelöst, dass die beiden Kreismesser jeweils um eine von der horizontalen Ausrichtung abweichende Achse I, II schwenkbar ausgebildet sind, wobei die Achsen I, II derart ausgerichtet sind, dass durch das Schwenken der Kreismesser um die Achsen I und II der Punkt P des kleinsten Spaltmaßes zwischen den Kreismessern vom tiefsten Messerpunkt M beider Kreismesser abweichend positionierbar ist, wobei die beiden Kreismesser zum Schwenken um die Achsen I, II während des Betriebs der Vorrichtung, also während der Gewinnung von Fleisch, ausgebildet und eingerichtet sind, und wobei den Kreismessern ein pneumatischer und/oder servomotorgesteuerter Betätigungsmechanismus zur Ausführung der Verstell- bzw. Schwenkbewegung um die Achsen I,II zugeordnet ist. Mit dieser erfindungsgemäßen Ausführung werden die einander entgegenstehenden Randbedingungen bzw. Zielsetzungen in einer bestmöglichen Weise aufeinander abgestimmt. Anders ausgedrückt ermöglicht die erfindungsgemäße Vorrichtung eine individuelle und bedarfsgerechte Anpassung des Spaltmaßes bezüglich Größe und Lage/Position am Umfang der Kreismesser, so dass jeder Fisch individuell ausbeuteoptimiert und qualitätsoptimiert bearbeitet werden kann. Dadurch, dass die Achsen I, II abweichend von der Horizontalen ausgerichtet sind, also in einem Winkel zur Horizontalen stehen, kann der Punkt P des kleinsten Spaltmaßes auf dem Umfang der Kreismesser ausgehend vom unteren Scheitelpunkt der Kreismesser durch Schwenken um die Achsen I, II "wandern", und zwar je nachdem, wo er gerade benötigt wird. Mit anderen Worten kann der Punkt des kleinsten/engsten Spaltmaßes vor oder hinter der vertikalen Symmetrieachse der Kreismesser liegen, so dass der Fisch beim Einlaufen zwischen das Kreismesserpaar oder Auslaufen aus dem Kreismesserpaar auf den engsten Spaltbereich trifft. Einfach ausgedrückt ermöglicht die Erfindung das produktspezifische Steuern/Führen der Kreismesser um eine vorzugsweise vertikal zur Transportebene E ausgerichtete Schwenkachse, mit dem Effekt, dass der Abstand zwischen den Kreismessern an nahezu jedem Punkt des Umfangs während eines Trennschnittes mindestens abschnittsweise bzw. temporär einerseits so groß gewählt werden kann, dass Flossenhalterbeschädigungen ausgeschlossen werden können und andererseits so klein ausgewählt werden kann, dass die maximale Ausbeute erzielt wird. Mit der Erfindung lassen sich während eines Trennschnittes die so genannte V-Stellung der beiden Kreismesser, in der die beiden Kreismesser den Punkt des geringsten Abstandes am unteren Scheitelpunkt der Kreismesser, also vertikal nach unten gerichtet (diese Stellung ist beispielsweise im Bereich des Fischschwanzes gewünscht, um z.B. ausreichend Platz für die Flossensäume im Schwanzbereich vorzusehen) aufweisen, und die so genannte X-Stellung der beiden Kreismesser, in der der Punkt des geringsten Abstands oberhalb des unteren Scheitelpunktes der Kreismesser, also z.B. vom unteren Scheitelpunkt entgegen der Fischlaufrichtung nach oben versetzt (diese Stellung ist beispielsweise im Bereich der Rückengräte gewünscht, um mit den Kreismessern möglichst dicht an der Rückengräte entlangzufahren) liegt, ideal miteinander kombinieren, was dazu führt, dass einerseits ein Ausbeutegewinn erzielt wird und andererseits Fehlschnitte minimiert werden. Bei der erfindungsgemäßen Vorrichtung sind die Kreismesser zum Schwenken um die Achsen I, II während des Betriebs der Vorrichtung, also während der Gewinnung von Fleisch, ausgebildet und eingerichtet. Mit anderen Worten kann die Ausrichtung der Kreismesser zueinander während des Bearbeitens eines Fisches über die Länge eines Fisches verändert werden, um auf die unterschiedlichen Gegebenheiten, insbesondere die sich verändernde Anatomie, reagieren zu können. Dadurch, dass den Kreismessern ein pneumatischer und/oder servomotorgesteuerter Betätigungsmechanismus zur Ausführung der Verstell- bzw. Schwenkbewegung um die Achsen I, II zugeordnet ist, wird ein schnelles und exaktes Verstellen der Kreismesser ermöglicht.

Eine bevorzugte Ausführungsform zeichnet sich dadurch aus, dass die beiden Kreismesser oberhalb der Transporteinrichtung angeordnet und zum Ausführen des gesamten Rückenschnitts ausgebildet und eingerichtet sind. Dadurch wird die Erfindung auf den besonders fleischhaltigen Rückenbereich fokussiert, um eine besonders hohe Ausbeuteeffizienz zu erreichen.

Vorzugsweise sind die beiden Kreismesser zum Freischneiden der Dorsalspeichen ausgebildet und eingerichtet. Der Bereich zwischen der Schwanzflosse und insbesondere der Schwanzwurzel einerseits und der Rückenflosse andererseits ist insbesondere beim Lachs besonders fleischhaltig, so dass die Ausbildung und Einrichtung der Kreismesser zum Freischneiden der Dorsalspeichen einen besonders signifikanten Einfluss auf die Ausbeutesteigerung aufweisen.

In einer bevorzugten Weiterbildung der Erfindung sind die Achsen I und II in einem Winkel zwischen 0° und 10° und insbesondere zwischen 0° und 6° zur vertikalen Ausrichtung ausgerichtet. Eine vertikale bzw. im Wesentlichen vertikale Ausrichtung, zu der auch noch eine Abweichung von 6° gehört, eignet sich besonders gut, um mit geringen Schwenkbewegungen eine für die Ausbeutesteigerung relevante "Verschiebung" des Punktes P mit kleinstem Spaltmaß zu erreichen. Mit anderen Worten führt bereits eine geringe Schwenkbewegung, die wahlweise vom Fisch selbst und/oder abhängig von erfassten und/oder bestimmten Messdaten ausgelöst wird, um die erfindungsgemäß ausgerichteten Achsen I, II dazu, dass der Punkt P des kleinsten Spaltmaßes unmittelbar und präzise einstellbar ist.

Eine weitere erfindungsgemäße Ausführungsform zeichnet sich dadurch aus, dass ausschließlich die Kreismesser jeweils selbst um die Achse I, II schwenkbar ausgebildet und eingerichtet sind. Dadurch ist eine einfache und leicht handhabbare Verstellung der Kreismesser realisiert.

Eine weitere Ausführungsform ist dadurch gekennzeichnet, dass gesamte, jeweils einen Antrieb und ein Kreismesser umfassende Einheiten jeweils um die Achse I, II schwenkbar ausgebildet und eingerichtet sind. Diese Ausbildung ist konstruktiv einfach und stabil, so dass eine besonders präzise Verstellung der Kreismesser gegeben ist. Eine besonders bevorzugte Ausgestaltung der Erfindung zeichnet sich dadurch aus, dass die Vorrichtung Messmittel zum Erfassen und/oder Bestimmen fischgrößenrelevanter Daten umfasst, derart, dass die beiden Kreismesser in Abhängigkeit der erfassten und/oder bestimmten Messdaten steuerbar, nämlich jeweils um die von einer horizontalen Ausrichtung abweichende Achse I, II schwenkbar sind. Damit die Trenneinrichtungen bzw. genauer die Kreismesser jeden Fisch besonders exakt und individuell bearbeiten können, werden die fischgrößenrelevanten Daten, wie z.B. Länge und/oder Dicke und/oder Position der Schwanzwurzel und/oder Position der Rückenflosse etc. erfasst und/oder bestimmt. Mittels einer Steuerung können die Kreismesser dann für unterschiedliche Fischgrößen auf der Basis der erfassten und/oder bestimmten Daten individuell zur Fleischgewinnung gesteuert werden. Das Steuern umfasst dabei sämtliche Bewegungen, nämlich insbesondere sämtliche Schwenk-, Kipp- und Drehbewegungen der Kreismesser sowie sonstige für das Trennen notwendige (Ein-)Stellschritte.

Eine weitere besonders bevorzugte Ausgestaltung der Erfindung sieht vor, dass die beiden Kreismesser teilweise frei bewegbar ausgebildet sind, derart, dass sie teilweise durch den zu bearbeitenden Fisch selbst steuerbar sind. Dadurch kann ein einfacher Aufbau der Vorrichtung erreicht werden, der dennoch eine verbesserte Ausbeute und eine Reduzierung der Fehlschnitte realisiert.

Die Aufgabe wird auch durch ein Verfahren mit den eingangs genannten Schritten dadurch gelöst, dass die beiden Kreismesser während des Trennschnittes mittels pneumatischer und/oder servomotorgesteuerter Betätigungsmechanismen jeweils um eine von der horizontalen Ausrichtung abweichende Achse I, II geschwenkt werden, wobei die Achsen I, II derart ausgerichtet sind, dass durch das Schwenken der Kreismesser um die Achsen I, II der Punkt P des kleinsten Spaltmaßes zwischen den Kreismessern vom tiefsten Messerpunkt M beider Kreismesser abweichend positioniert wird. Durch dieses erfindungsgemäße Verfahren ist es möglich, die Kreismesser je nachdem, an welcher Position des Fisches sich die Kreismesser befinden, stets den optimalen Kreismesserabstand bzw. die optimale Position des Punktes mit kleinstem Spaltmaß zu finden.

Erfindungsgemäß wird der Punkt P des kleinsten Spaltmaßes während des Transports der Fische durch die beiden Kreismesser unterschiedlich positioniert. Mit anderen Worten wandert der Punkt P bei der Bearbeitung eines einzelnen Fisches an unterschiedliche Punkte P.

Vorzugsweise wird mit den beiden Kreismessern der gesamte Trenn- bzw. Rückenschnitt von der Schwanzflosse bis zum Kopfbereich des Fisches ausgeführt, wobei die beiden Kreismesser zum Einführen des Fisches zwischen die Kreismesser den Punkt P des kleinsten Spaltmaßes etwa am tiefsten Messerpunkt M aufweisen und dieser Punkt P des kleinstes Spaltmaßes durch das Schwenken aus dem tiefsten Messerpunkt M heraus wandert. In einer Ausgangsstellung stehen die Messer parallel oder in einer leichten V-Stellung geneigt zueinander, so dass der Punkt P des kleinsten Spaltmaßes am tiefsten Messerpunkt M existiert. Dieser Abstand a am tiefsten Messerpunkt ist grundsätzlich fixiert, also während des Schneidens unveränderlich, um ein Minimum an Flossenhalterfehlern insbesondere beim Eintreffen der zu bearbeitenden Fische an der Trenneinrichtung zu erreichen. Durch das Schwenken der Kreismesser um die Achsen I, II nähern sich die beiden Kreismesser bzw. Kreismesserschneiden der Maschinenmitte, um ein Maximum an Ausbeute zu erzielen. Durch das Schwenken um die Achsen I, II entfernt sich der Punkt P des kleinsten Spaltmaßes vom tiefsten Messerpunkt M und wandert entlang des Umfangs der Kreismesser nach oben, wobei sich die Kreismesser mit ihren Schneidkanten durch das Schwenken auf einer Seite aufeinander zu bewegen, während sie sich auf der entgegen gesetzten Seite voneinander entfernen. Die für die maximale Fleischgewinnung bevorzugte Position des Punktes P des kleinsten Spaltmaßes, an dem sich die beiden Kreismesser nahezu berühren können, liegt dann vorzugsweise geringfügig höher als die Spitzen der Dorsalspeichen. Sobald der fleischhaltige Bereich gelöst bzw. von den Dorsalspeichen getrennt ist, kann durch das Schwenken um die Achsen I, II die Position des Punktes P des geringsten Spaltmaßes erneut verändert werden, nämlich zum Beispiel wieder an den tiefsten Messerpunkt M, an dem der Punkt des geringsten Spaltmaßes den definierten Abstand a aufweist, so dass z.B. die Rückenflosse ungehindert und beschädigungsfrei zwischen den Kreismessern hindurchgeführt werden kann.

Eine besonders vorteilhafte Weiterbildung der Erfindung sieht vor, dass mit den beiden Kreismessern die Dorsalspeichen freigeschnitten werden, wobei die Kreismesser derart gesteuert bzw. geschwenkt werden, dass sich der Punkt P des kleinstes Spaltmaßes mindestens im Bereich zwischen der Schwanzflosse und der Rückenflosse unmittelbar oberhalb der Spitzen der Dorsalspeichen befindet.

Vorteilhafterweise werden ausschließlich die Kreismesser selbst zum Verändern der Lage des Punktes P des kleinsten Spaltmaßes um die Achsen I, II geschwenkt.

In einer weiteren bevorzugten Option werden gesamte, jeweils einen Antrieb und ein Kreismesser umfassende Einheiten jeweils zum Verändern der Lage des Punktes P des kleinsten Spaltmaßes um die Achsen I, II geschwenkt.

In einer vorteilhaften Weiterbildung der Erfindung werden fischgrößenrelevante Daten mittels eines Messmittels erfasst und/oder bestimmt, und die beiden Kreismesser werden während des Trennschnitts in Abhängigkeit der erfassten und/oder bestimmten Messdaten mittels pneumatischer und/oder servomotorgesteuerter Betätigungsmechanismen jeweils um die von der horizontalen Ausrichtung abweichende Achse I, II gesteuert, nämlich geschwenkt.

Vorzugsweise werden die beiden Kreismesser in Abhängigkeit ermittelter fischgrößenrelevanter Daten und durch den Fisch selbst gesteuert.

Die sich daraus ergebenden Vorteile wurden bereits im Zusammenhang mit der erfindungsgemäßen Vorrichtung, die sich insbesondere zur Ausführung des Verfahrens eignet, beschrieben, weshalb zur Vermeidung von Wiederholungen auf die entsprechenden Passagen verwiesen wird.

Weitere zweckmäßige und/oder vorteilhafte Merkmale und Weiterbildungen ergeben sich aus den Unteransprüchen sowie der Beschreibung. Eine besonders bevorzugte Ausführungsform der Erfindung wird anhand der beigefügten Zeichnung näher erläutert. In der Zeichnung zeigt:
- Fig. 1: eine schematische Darstellung einer erfindungsgemäßen Vorrichtung umfassend ein Messmittel zum Erfassen und/oder Bestimmen fischgrößenrelevanter Daten in einer perspektivischen Darstellung von schräg oben und vorne,
- Fig. 2: die Trenneinrichtung mit zwei Kreismessern in einer Ansicht von vorne in Transportrichtung T,
- Fig. 3: die Trenneinrichtung gemäß Figur 2 in Draufsicht in einer Ausgangsstellung, und
- Fig. 4: die Trenneinrichtung gemäß Figur 3 in Draufsicht in einer ausbeuteoptimierten Schwenkstellung.

Die in der Zeichnung dargestellte Vorrichtung dient zum automatischen Gewinnen von Fleisch von geköpften und mindestens teilweise bzw. weitestgehend entweideten Fischen, wobei die Erfindung anhand der Rückenmesser bzw. anhand des Freischneidens von Dorsalspeichen bei einem Weißfisch, insbesondere einem Kabeljau näher erläutert wird. Die Vorrichtung ist jedoch in gleicher Weise auch für andere Fischarten, insbesondere Lachs einsetzbar. Das Erfindungsprinzip ist grundsätzlich auf eine zwei rotierend antreibbare Kreismesser, die zur Bildung eines Spalts beabstandet zueinander angeordnet und parallel oder in einer V-förmigen Anordnung zueinander stehen, umfassende Vorrichtung und somit z.B. auch in gleicher Weise auf das Freischneiden von Ventralspeichen oder von anderen zum Grätengerüst gehörenden Gräten oder Grätengerüstabschnitten anwendbar.

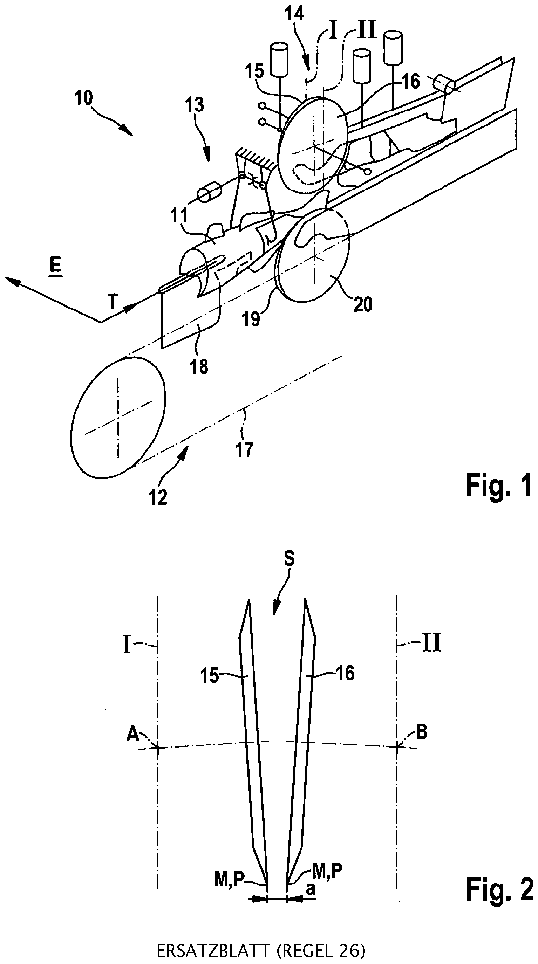

In der Figur 1 ist eine Vorrichtung 10 zum automatischen Gewinnen von Fleisch von geköpften und entweideten Fischen 11 dargestellt, die eine Transporteinrichtung 12 zum Transportieren der Fische 11 Schwanz voraus in horizontaler Transportrichtung T entlang eines Transportpfads sowie eine Trenneinrichtung 14 zum Trennen des Fleisches vom Grätengerüst umfasst. Die Trenneinrichtung 14 weist mindestens zwei rotierend antreibbare und steuerbare Kreismesser 15, 16 auf, die auf einander gegenüberliegenden Seiten des Transportpfads zur Bildung eines Spalts S beabstandet zueinander angeordnet sind. Die beiden Kreismesser 15, 16 können parallel zueinander oder in einer V-förmigen Zuordnung zueinander stehen, wobei in der letztgenannten Anordnung der Punkt P des kleinsten Spaltmaßes am tiefsten Messerpunkt M liegt (siehe z.B. Figur 2).

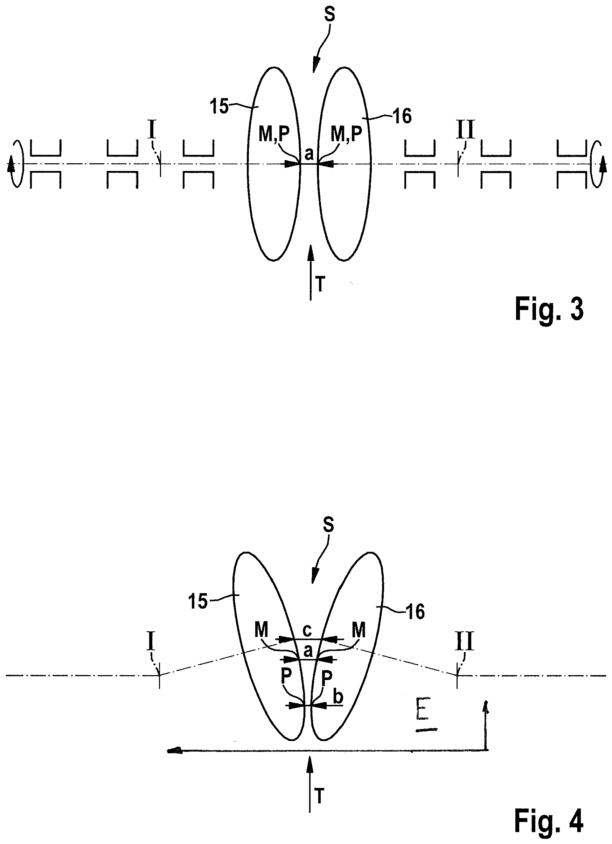

Diese Vorrichtung 10 zeichnet sich erfindungsgemäß dadurch aus, dass die beiden Kreismesser 15, 16 jeweils um eine von der horizontalen Ausrichtung abweichende Achse I, II schwenkbar ausgebildet sind, wobei die Achsen I, II derart ausgerichtet sind, dass durch das Schwenken der Kreismesser um die Achsen I und II der Punkt P des kleinsten Spaltmaßes zwischen den Kreismessern 15, 16 vom tiefsten Messerpunkt M beider Kreismesser 15, 16 abweichend positionierbar ist, wobei die beiden Kreismesser 15, 16 zum Schwenken um die Achsen I, II während des Betriebs der Vorrichtung 10, also während der Gewinnung von Fleisch, ausgebildet und eingerichtet sind, und wobei den Kreismessern 15, 16 ein pneumatischer und/oder servomotorgesteuerter Betätigungsmechanismus zur Ausführung der Verstell- bzw. Schwenkbewegung um die Achsen I,II zugeordnet ist. Damit weisen die Kreismesser 15, 16 einen zusätzlichen Freiheitsgrad auf, der es ermöglicht, die Kreismesser 15, 16 je nach Bedarf hinsichtlich der Größe des Abstands und insbesondere bezüglich der Lage des Punktes P des geringsten Spaltmaßes individuell zu steuern. Der Abstand a der beiden Kreismesser 15, 16 am tiefsten Messerpunkt M ist vorzugsweise konstant und durch das Schwenken um die Achsen I, II wenn überhaupt nur unwesentlich beeinflusst. In einer Ausgangsstellung fallen der Punkt P des kleinsten Spaltmaßes und die tiefsten Messerpunkte M zusammen (siehe z.B. Figuren 2 und 3). Sobald die Kreismesser 15, 16 aus dieser Ausgangsstellung herausgeschwenkt sind, liegen der Punkt P des kleinsten Spaltmaßes einerseits und die tiefsten Messerpunkte M andererseits auseinander. Sobald der Punkt P des kleinsten Spaltmaßes durch das Schwenken um die Achsen I, II aus der Überdeckung mit den tiefsten Messerpunkten M herausläuft, ist der tatsächliche Abstand b am Punkt P des kleinsten Spaltmaßes zwischen den Kreismessern 15, 16 kleiner als der Abstand a an den tiefsten Messerpunkten M (siehe z.B. Figur 4). Diese Verstellung ist einerseits durch den Fisch selbst und/oder mittels der Steuerung auf der Basis zuvor erfasster und/oder bestimmter Messdaten kontinuierlich oder getaktet, also nur zu definierten Zeitpunkten, ausführbar.

Sowohl dem Kreismesser 15, 16 selbst, als auch einer aus Antrieb und Kreismesser 15, 16 gebildeten Einheit kann ein Betätigungsmechanismus zugeordnet sein, der pneumatisch und/oder servomotorgesteuert angetrieben ist. Mit dem pneumatischen Mechanismus kann besonders einfach und schnell zwischen zwei Positionen hin und her geschaltet werden. Mit dem servomotorgesteuerten Mechanismus kann eine kontrollierte Schwenkbewegung über den gesamten Rückenschnitt ausgeführt werden.

Die im Folgenden beschriebenen Merkmale und Weiterbildungen stellen für sich betrachtet oder in Kombination miteinander bevorzugte Ausführungsformen dar. Es wird ausdrücklich darauf hingewiesen, dass Merkmale, die in den Ansprüchen und/oder der Beschreibung zusammengefasst oder in einer gemeinsamen Ausführungsform beschrieben sind, auch funktional eigenständig die weiter oben beschriebene Vorrichtung 10 weiterbilden können.

Wie erwähnt, können die Kreismesser 15, 16 parallel zueinander oder in einer V-förmigen Anordnung angeordnet sein. Optional sind die Kreismesser 15, 16 dazu um eine im Wesentlichen horizontal gerichtete Achse A, B verstellbar. Eine leichte Abweichung der Ausrichtung gegenüber der Horizontalen um wenige Grad ist durch den Begriff "im Wesentlichen" ausdrücklich einbezogen. Durch die Verstellbarkeit um die Achsen A, B sind die Kreismesser 15, 16 aus der parallelen Anordnung in die V-förmige Anordnung und zurück bewegbar. Des Weiteren ist auch der Abstand der beiden Kreismesser 15, 16 zueinander veränderbar. Insbesondere sind die Kreismesser 15, 16 z.B. mittels mechanischer Federn vorgespannt, derart, dass sie bezüglich ihres Abstandes zueinander einstellbar sind. Die Kreismesser 15, 16 lassen sich z.B. durch die Rückengräte selbsttätig auseinander drücken.

Die Kreismesser 15, 16 sind durch nicht dargestellte Antriebe rotierend antreibbar. Jedes Kreismesser 15, 16 bildet mit einem Antrieb eine Einheit. Die Einheiten können des Weiteren Gelenkelemente, Übertragungsmechanismen und andere zur Ausübung und Übertragung von Drehungen und/oder Verstellbewegungen der Kreismesser 15, 16 erforderliche Komponenten umfassen. Die Transporteinrichtung 12 umfasst vorzugsweise ein umlaufend und endlos angetriebenes Förderelement 17, beispielsweise einen Kettenförderer, an dem mindestens ein Stützkörper 18, der auch als Sattel bezeichnet wird, angeordnet ist. Auf diesen Sattel ist jeweils ein Fisch 11 aufsetzbar bzw. aufsattelbar, derart, dass der Fisch 11 Schwanz voraus mit dem Rücken nach oben entlang des Transportpfads in Transportrichtung T transportierbar ist.

Die Kreismesser 15, 16 sind oberhalb der Transporteinrichtung 12 angeordnet. Alternativ oder ergänzend kann die Trenneinrichtung 14 auch weitere Kreismesser 19, 20 aufweisen, die unterhalb der Transporteinrichtung 12 angeordnet sind. Genauer können die Kreismesser 19, 20, die zum Freischneiden der Ventralspeichen ausgebildet und eingerichtet sind, derart angeordnet sein, dass die Schneidkanten der Kreismesser 19, 20 von unten, also bauchseitig, am Fisch 11 angreifen. Die beiden erstgenannten Kreismesser 15, 16 sind zum Freischneiden der Dorsalspeichen ausgebildet und eingerichtet. Die Achsen I, II, um die die Kreismesser 15, 16 schwenkbar sind, stehen in einer ersten Ausführungsform in einer vertikalen Ausrichtung. In weiteren Ausführungsformen können die Achsen I, II aber auch in einem Winkel zwischen 0° und 10° und insbesondere zwischen 0° und 6° zur vertikalen Ausrichtung stehen. Selbst eine Winkelstellung der Achsen I, II zur vertikalen Ausrichtung von größer 10° ist möglich.

In einer bevorzugten Ausführungsform sind ausschließlich die Kreismesser 15, 16 jeweils selbst um die Achse I, II schwenkbar ausgebildet und eingerichtet. In dieser Variante sind die Kreismesser 15, 16 dann mit flexiblen Gelenken, wie sie in den Figuren 3 und 4 schematisch angedeutet sind, mit den Antrieben in Wirkverbindung. In anderen Ausführungsformen ist die gesamte Einheit, jeweils umfassend einen Antrieb und ein Kreismesser 15, 16, schwenkbar ausgebildet und eingerichtet.

In der Figur 1 ist eine Ausführungsform der Erfindung dargestellt, in der die Vorrichtung Messmittel zum Erfassen und/oder Bestimmen fischgrößenrelevanter Daten umfasst, derart, dass die beiden Kreismesser 15, 16 in Abhängigkeit der erfassten und/oder bestimmten Messdaten steuerbar, nämlich jeweils um die von einer horizontalen Ausrichtung abweichende Achse I, II schwenkbar sind. Die detaillierte Ausbildung der Messmittel 13 ist nicht erfindungsrelevant und kann daher in bekannter Weise mechanische, elektronische, optische oder andere bekannte Elemente oder Elementkombinationen aufweisen, die zum Erfassen und/oder Bestimmen fischgrößenrelevanter Daten geeignet sind. Das Messmittel 13 umfasst insbesondere solche Elemente, mittels denen die Größe jedes Fisches 11 und/oder die Breite jedes Fisches 11 und/oder die Lage der Schwanzwurzel und/oder die Lage der Rückenflosse ermittelbar, also insbesondere direkt erfassbar und/oder über entsprechende Berechnungsmodelle bestimmbar, ist.

In weiteren Ausgestaltungen können die Kreismesser 15, 16 teilweise frei bewegbar ausgebildet sein, derart, dass sie teilweise durch den zu bearbeitenden Fisch und in Kombination in Abhängigkeit der erfassten und/oder bestimmten Messdaten, steuerbar sind.

Sämtliche Ausführungsformen, die im Zusammenhang mit den Rückenmessern, nämlich den Kreismessern 15, 16, beschrieben wurden, gelten in entsprechender Weise auch für die Bauchmesser, nämlich die Kreismesser 19, 20. Dies gilt auch für das im Folgenden anhand der Zeichnung beispielhaft beschriebene Verfahren zum Freischneiden der Dorsalspeichen.

Jeder Fisch 11 wird manuell oder automatisch auf einem Stützkörper 18 positioniert, und zwar mit der offenen und entweideten Bauchhöhle nach unten und Schwanz voraus. Mit dem Stützkörper 18 wird der Fisch 11 mittels der Transporteinrichtung 12 in horizontaler Transportrichtung T in Richtung der Trenneinrichtung 14 transportiert. Vor Beginn des Trennschnitts am Schwanz stehen die beiden Kreismesser 15, 16 in ihrer z.B. in Figur 2 oder 3 dargestellten Ausgangsstellung, nämlich mit einem Abstand a am tiefsten Messerpunkt M und vorzugsweise leicht geneigt zueinander eine V-Form bildend. Der Abstand a bildet in der Ausgangsstellung den Punkt P des kleinsten Spaltmaßes und beträgt bevorzugt etwa 5mm. Der Punkt P des kleinsten Spaltmaßes (bei zwei beabstandeten Kreismessern 15, 16 bildet sich dazwischen eine Linie L des kleinsten Spaltmaßes) liegt im unteren Scheitelpunkt der Kreismesser 15, 16 und ist somit der Rückengräte zugewandt. In dieser Ausgangsstellung, in der der Punkt des größten Abstandes der beiden Kreismesser 15, 16 voneinander am oberen Scheitelpunkt der Kreismesser liegt, ist ausreichend Platz gegeben für die Flossensäume im Schwanzbereich, so dass Flossenfehler beim Einführen des Fisches 11 zwischen die Kreismesser 15, 16 vermieden werden. Durch den kontinuierlichen Transport der Fische 11 in Transportrichtung T beginnt der Schnitt, sobald der Fisch 11 bzw. das zu trennende Fleisch in den Wirkbereich der Kreismesser 15, 16 gelangt.

Um die Kreismesser 15, 16 während des Trenn- bzw. Rückenschnitts individuell steuern zu können, können mittels des Messmittels 13 von jedem Fisch 11 fischgrößenrelevante Daten erfasst und/oder bestimmt werden. Beispielsweise können die Schwanzwurzellage und die Position der Rückenflosse mit einer Lichtschranke erfasst werden. Der Fisch 11 bzw. das Grätengerüst kann vollständig vor dem Trennen/Schneiden vermessen werden. Die einzelnen Messschritte können jedoch auch jeweils individuell und separat während des Trennens/Schneidens erfolgen. Alternativ können die Kreismesser 15, 16 auch durch den Fisch selbst und/oder mittels einer Kombination aus aktiver Steuerung (durch einen Betätigungsmechanismus) und passiver Steuerung (durch den Fisch selbst) gesteuert, nämlich um die Achsen I, II geschwenkt werden. In entsprechender Weise können auch die Bewegungen um die Achsen A, B sowie der Abstand der Kreismesser 15, 16 zueinander gesteuert werden.

Wenn der Fisch beispielsweise mit der zuvor ermittelten Lage der Schwanzwurzel in den Wirkbereich der Kreismesser 15, 16 gelangt, können diese, da die Schwanzflosse zu diesem Zeitpunkt bereits zuverlässig außerhalb des Wirkbereichs der Kreismesser 15, 16, nämlich zwischen den Kreismessern 15, 16, liegt, ihre Position verändern, indem die Kreismesser 15, 16 um die Achse I, II derart geschwenkt werden, dass sich die Schneidkanten der Kreismesser 15, 16 auf der dem Fisch 11 zugewandten bzw. auf der der Transportrichtung T entgegen gerichteten Seite, also am Einlaufbereich des Fisches zwischen die Kreismesser 15, 16, aufeinander zu bewegen. Anders ausgedrückt können die Kreismesser 15, 16 einschwenken, und zwar um die Achsen I, II, so dass sich der Punkt P des geringsten Spaltmaßes weg vom tiefsten Messerpunkt M entlang des Umfangs der Kreismesser 15, 16 in Fischlaufrichtung vor den Mittelpunkt der Kreismesser 15, 16 verschiebt bzw. verlagert, vorzugsweise bis der Punkt P des kleinsten Spaltmaßes kurz oberhalb der Spitzen der Dorsalspeichen liegt. Dieses Schwenken bewirkt eine Näherung der Kreismesser 15, 16 bzw. Kreismesserschneiden an einem vom tiefsten Messerpunkt M abweichenden Messerpunkt, an dem der Abstand der Kreismesser 15, 16 den Betrag b aufweist (siehe z.B. Figur 4). Der Abstand a am tiefsten Messerpunkt ist im Wesentlichen gleichgeblieben, kann aber z.B. durch den Druck der Rückengräte, deren Dicke sich über die Länge verändern kann, ebenfalls verändert werden. Der Abstand b ist kleiner als a. In dieser Kreismesserstellung kann die maximale Ausbeute erzielt werden.

Unmittelbar bevor der Fisch 11 mit seiner Rückenflosse die Kreismesser 15, 16 erreicht, schwenken die Kreismesser 15, 16 in der entgegengesetzten Richtung wieder auf. Die Lage bzw. der Beginn der Rückenflosse wurde durch das Messmittel 13 ermittelt, so dass die Kreismesser 15, 16 automatisch aus der Maschinenmitte nach außen schwenken. Dieser Vorgang des Ein- und Ausschwenkens kann für jeden Fisch individuell wiederholt werden, sollten während des Rückenschnitts weitere Störstellen im Wirkbereich der Kreismesser 15, 16 liegen. Nach Beendigung des Rückenschnitts werden die Kreismesser 15, 16 zurück in die oben beschriebene Ausgangsstellung bewegt, um für den folgenden Rückenschnitt präpariert zu sein.

Bei der Steuerung der Kreismesser 15, 16 durch den Fisch 11 selbst bestimmt die Fischgröße bzw. genauer die sich in Form und/oder Dicke vom Schwanzende bis zum kopfseitigen Ende verändernde Haupt-/Mittelgräte (also die Grätenform) des Fisches 11 die jeweilige Schwenkbewegung der Kreismesser 15, 16. Dies betrifft insbesondere Fische mit einer sich über die Länge verändernde Grätenform, wie z.B. beim Kabeljau.

In der Grundstellung stehen die beiden Kreismesser 15, 16 beginnend am Schwanzende in der V-förmigen Grundstellung zueinander. Das bedeutet, dass der Punkt P des geringsten Spaltmaßes der Haupt-/Mittelgräte des Fisches 11 zugewandt ist. Der weiteste Punkt zwischen den Kreismessern 15, 16 liegt am oberen Scheitelpunkt der Kreismesser 15, 16 und bietet somit ausreichend Platz für die Flossensäume im Schwanzbereich der Fische 11. Durch den sich ändernden Querschnitt der Haupt-/Mittelgräte wird es zum sicheren Führen der zum Kopfende dicker werdenden Hauptgräten erforderlich, den Spalt zwischen den Kreismessern 15, 16 zu vergrößern und gleichzeitig die Stellung der Kreismesser 15, 16 dahingehend zu verändern, dass die Kreismesserschneiden im richtigen Zeitpunkt den erforderlichen Platz für die obere Spitze des dann dreieckförmigen Querschnitts der Haupt-/Mittelgräte freigeben können. Durch die freie Bewegbarkeit der Kreismesser 15, 16 um die Achsen I, II ergeben sich bei dem Durchlauf jedes Fisches durch die Kreismesser 15, 16 unterschiedliche Messerabstände und Stellungen der Kreismesser 15, 16 zueinander. Durch die veränderte Ausrichtung der Kreismesser 15, 16 zueinander können sich die Kreismesser 15, 16 an die jeweilige Kontur der Hauptgräte anschmiegen. Des Weiteren ermöglicht das Ausrichten der Kreismesser 15, 16 an die Kontur der Hauptgräte, dass die Kreismesser 15, 16 einen tieferen Schnitt in Richtung der Hauptgräte ausführen können. Dadurch, dass die Kreismesser 15, 16 einen tieferen Schnitt durchführen können, wird gleichzeitig die Hauptgräte sicher zwischen den Kreismessern 15, 16 geführt und zentriert.

Neben den beschriebenen Bewegungen bzw. Steuerungsmöglichkeiten um die Achsen I, II können die Kreismesser 15, 16 zusätzlich, auch überlagert, um die im Wesentlichen horizontal gerichteten Achsen A, B geschwenkt werden oder in der Transportebene E quer zur Transportrichtung T vom Stützkörper 18 weg oder auf diesen zu bewegt werden. Die Querbewegung ist vorzugsweise eine durch die Größe der Fische 11 selbst ausgelöste Bewegung, indem die Kreismesser 15, 16 axial nach außen verdrängbar sind, beispielsweise gegen eine Federkraft.

Das Steuern der Kreismesser 15, 16 auf der Basis der erfassten und/oder bestimmten Messdaten und/oder durch den Fisch selbst erfolgt während des Trennschnitts. Mit den Kreismessern 15, 16 wird der gesamte Trenn- bzw. Rückenschnitt von der Schwanzflosse bis zum Kopfbereich ausgeführt, wobei die Kreismesser 15, 16 während dieses Trenn- bzw. Rückenschnitts einmal oder mehrfach um die Achsen I, II geschwenkt werden können, um zuvor ermittelten Störstellen, wie der Schwanzflosse, der Rückenflosse oder auch Verwachsungen ausweichen zu können. Für die Schwenk- oder Ausweichbewegungen können ausschließlich die Kreismesser 15, 16 geschwenkt werden. Es besteht aber auch die Möglichkeit, die gesamte einen Antrieb und ein Kreismesser 15, 16 umfassende Einheit zu schwenken. Die Schwenk- oder Einstellbewegung kann durch pneumatische Komponenten oder vorzugsweise auch durch einen Servomotor ausgeübt werden.

## Patentansprüche

1. Vorrichtung (10) zur automatischen Gewinnung von Fleisch von geköpften und entweideten Fischen (11), umfassend eine Transporteinrichtung (12) zum Transportieren der Fische (11) Schwanz voraus in horizontaler Transportrichtung T entlang eines Transportpfads sowie eine Trenneinrichtung (14) zum Trennen des Fleisches vom Grätengerüst, wobei die Trenneinrichtung (14) mindestens zwei rotierend antreibbare und steuerbare Kreismesser (15, 16) aufweist, die auf einander gegenüberliegenden Seiten des Transportpfads zur Bildung eines Spalts S beabstandet zueinander angeordnet sind, **dadurch gekennzeichnet, dass** die beiden Kreismesser (15, 16) jeweils um eine von einer horizontalen Ausrichtung abweichende Achse I, II schwenkbar ausgebildet sind, wobei die Achsen I, II derart ausgerichtet sind, dass durch das Schwenken der Kreismesser (15, 16) um die Achsen I und II der Punkt P des kleinsten Spaltmaßes zwischen den Kreismessern (15, 16) vom tiefsten Messerpunkt M beider Kreismesser (15, 16) abweichend positionierbar ist, wobei die beiden Kreismesser (15, 16) zum Schwenken um die Achsen I, II während des Betriebs der Vorrichtung (10), also während der Gewinnung von Fleisch ausgebildet und eingerichtet sind, und wobei den Kreismessern (15, 16) ein pneumatischer und/oder servomotorgesteuerter Betätigungsmechanismus zur Ausführung der Verstell- bzw. Schwenkbewegung um die Achsen I, II zugeordnet ist.

2. Vorrichtung nach Anspruch 1, **dadurch gekennzeichnet, dass** die beiden Kreismesser (15, 16) oberhalb der Transporteinrichtung (12) angeordnet und zum Ausführen des gesamten Rückenschnitts ausgebildet und eingerichtet sind.

3. Vorrichtung nach Anspruch 1 oder 2, **dadurch gekennzeichnet, dass** die beiden Kreismesser (15, 16) zum Freischneiden der Dorsalspeichen ausgebildet und eingerichtet sind.

4. Vorrichtung nach einem oder mehreren der Ansprüche 1 bis 3, **dadurch gekennzeichnet, dass** die Achsen I und II in einem Winkel zwischen 0° und 10° und insbesondere zwischen 0° und 6° zur vertikalen Ausrichtung ausgerichtet sind.

5. Vorrichtung nach einem oder mehreren der Ansprüche 1 bis 4, **dadurch gekennzeichnet, dass** ausschließlich die Kreismesser (15, 16) jeweils selbst um die Achse I, II schwenkbar ausgebildet und eingerichtet sind.

6. Vorrichtung nach einem oder mehreren der Ansprüche 1 bis 4, **dadurch gekennzeichnet, dass** die gesamte, jeweils einen Antrieb und ein Kreismesser (15, 16) umfassende Einheiten jeweils um die Achse I, II schwenkbar ausgebildet und eingerichtet sind.

7. Vorrichtung nach einem oder mehreren der Ansprüche 1 bis 6, **dadurch gekennzeichnet, dass** die Vorrichtung Messmittel (13) zum Erfassen und/oder Bestimmen fischgrößenrelevanter Daten umfasst, derart, dass die beiden Kreismesser (15, 16) in Abhängigkeit der erfassten und/oder bestimmten Messdaten steuerbar, nämlich jeweils um die von einer horizontalen Ausrichtung abweichende Achse I, II schwenkbar sind.

8. Vorrichtung nach einem oder mehreren der Ansprüche 1 bis 7, **dadurch gekennzeichnet, dass** die beiden Kreismesser (15,16) mindestens teilweise frei bewegbar ausgebildet sind, derart, dass sie mindestens teilweise durch den zu bearbeitenden Fisch selbst steuerbar sind.

9. Verfahren zum automatischen Gewinnen von Fleisch von geköpften und entweideten Fischen (11), umfassend die Schritte:
- Transportieren der Fische (11) Schwanz voraus in horizontaler Transportrichtung T entlang eines Transportpfads mittels einer Transporteinrichtung (12), und
- Trennen des Fleisches vom Grätengerüst mittels einer Trenneinrichtung (14), wobei das Trennen durch zwei rotierend angetriebene Kreismesser (15, 16) der Trenneinrichtung (14) erfolgt, die auf einander gegenüberliegenden Seiten des Transportpfads zur Bildung eines Spalts S beabstandet zueinander angeordnet sind und gesteuert werden,
**dadurch gekennzeichnet, dass** die beiden Kreismesser (15, 16) während des Trennschnittes mittels pneumatischer und/oder servomotorgesteuerter Betätigungsmechanismen jeweils um eine von der horizontalen Ausrichtung abweichende Achse I, II geschwenkt werden, wobei die Achsen I, II derart ausgerichtet sind, dass durch das Schwenken der Kreismesser (15, 16) um die Achsen I, II der Punkt P des kleinsten Spaltmaßes zwischen den Kreismessern (15, 16) vom tiefsten Messerpunkt M beider Kreismesser (15, 16) abweichend positioniert wird.

10. Verfahren nach Anspruch 9, **dadurch gekennzeichnet, dass** der Punkt P des kleinsten Spaltmaßes während des Transports der Fische durch die beiden Kreismesser (15, 16) unterschiedlich positioniert wird.

11. Verfahren nach Anspruch 9 oder 10, **dadurch gekennzeichnet, dass** mit den beiden Kreismessern (15, 16) der gesamte Trenn- bzw. Rückenschnitt von der Schwanzflosse bis zum Kopfbereich des Fisches (11) ausgeführt wird, wobei die beiden Kreismesser (15, 16) zum Einführen des Fisches (11) zwischen die Kreismesser (15, 16) den Punkt P des kleinsten Spaltmaßes etwa am tiefsten Messerpunkt M aufweisen und dieser Punkt P des kleinstes Spaltmaßes durch das Schwenken aus dem tiefsten Messerpunkt M heraus wandert.

12. Verfahren nach einem oder mehreren der Ansprüche 9 bis 11, **dadurch gekennzeichnet, dass** mit den beiden Kreismessern (15, 16) die Dorsalspeichen freigeschnitten werden, wobei die Kreismesser (15, 16) derart gesteuert bzw. geschwenkt werden, dass sich der Punkt P des kleinstes Spaltmaßes mindestens im Bereich zwischen der Schwanzflosse und der Rückenflosse unmittelbar oberhalb der Spitzen der Dorsalspeichen befindet.

13. Verfahren nach einem oder mehreren der Ansprüche 9 bis 12, **dadurch gekennzeichnet, dass** ausschließlich die Kreismesser (15, 16) selbst zum Verändern der Lage des Punktes P des kleinsten Spaltmaßes um die Achsen I, II geschwenkt werden.

14. Verfahren nach einem oder mehreren der Ansprüche 9 bis 12, **dadurch gekennzeichnet, dass** die gesamte, jeweils einen Antrieb und ein Kreismesser (15, 16) umfassende Einheiten jeweils zum Verändern der Lage des Punktes P des kleinsten Spaltmaßes um die Achsen I, II geschwenkt werden.

15. Verfahren nach einem oder mehreren der Ansprüche 9 bis 14, **dadurch gekennzeichnet, dass** fischgrößenrelevante Daten mittels eines Messmittels (13) erfasst und/oder bestimmt werden, und die beiden Kreismesser (15, 16) während des Trennschnitts in Abhängigkeit der erfassten und/oder bestimmten Messdaten mittels pneumatischer und/oder servomotorgesteuerter Betätigungsmechanismen jeweils um die von der horizontalen Ausrichtung abweichende Achse I, II gesteuert, nämlich geschwenkt werden.

16. Verfahren nach einem oder mehreren der Ansprüche 9 bis 15, **dadurch gekennzeichnet, dass** die beiden Kreismesser (15, 16) in Abhängigkeit ermittelter fischgrößenrelevanter Daten und durch den Fisch selbst gesteuert werden.

## Claims

1. Apparatus (10) for automatically recovering flesh from beheaded and gutted fish (11), comprising a transport device (12) for transporting the fish (11) tail-first along a transport path in horizontal transport direction T, and a separating device (14) for separating the flesh from the bone structure, wherein the separating device (14) has at least two rotatably driven and controllable circular knives (15, 16) which are arranged at a distance from each other on mutually opposing sides of the transport path in order to form a gap S, **characterized in that** the two circular knives (15, 16) are designed such that the circular knives can each be pivoted about an axis I, II that differs from a horizontal orientation, wherein the axes I, II are oriented in such a way that, by pivoting the circular knives (15, 16) about the axes I and II, the point P of the smallest gap size between the circular knives (15, 16) can be positioned differently from the lowest knife point M of the two circular knives (15, 16), wherein the two circular knives (15, 16) are designed and configured to pivot about the axes I, II during operation of the apparatus (10), that is while recovering flesh, and wherein a pneumatic and/or servomotor-controlled actuating mechanism is assigned to the circular knives (15, 16) for performing the adjusting or pivoting movement about the axes I, II.

2. Apparatus according to claim 1, **characterized in that** the two circular knives (15, 16) are arranged above the transport device (12) and are designed and configured to perform the entire dorsal incision.

3. Apparatus according to claim 1 or 2, **characterized in that** the two circular knives (15, 16) are designed and configured for cutting free the dorsal spokes.

4. Apparatus according to one or more of claims 1 to 3, **characterized in that** the axes I and II are oriented at an angle between 0° and 10° and in particular between 0° and 6° to the vertical orientation.

5. Apparatus according to one or more of claims 1 to 4, **characterized in that** only the circular knives (15, 16) are each designed and configured to be pivotable themselves about the axis I, II.

6. Apparatus according to one or more of claims 1 to 4, **characterized in that** the entire units, each comprising a drive and a circular knife (15, 16), are designed and configured to be pivotable in each case about the axis I, II.

7. Apparatus according to one or more of claims 1 to 6, **characterized in that** the apparatus comprises measuring means (13) for detecting and/or determining fish-size-relevant data in such a manner that the two circular knives (15, 16) are controllable dependent on the detected and/or determined measuring data, namely each being pivotable about the axis I, II that differs from a horizontal orientation.

8. Apparatus according to one or more of claims 1 to 9, **characterized in that** the two circular knives (15, 16) are designed so as to be at least partly freely movable, in such a manner that they can be controlled at least partly by the actual fish to be processed.

9. Method for automatically recovering flesh from beheaded and gutted fish (11), comprising the steps:
- Transporting the fish (11) tail-first along a transport path in horizontal transport direction T by means of a transport device (12), and
- Separating the flesh from the bone structure by means of a separating device (14), wherein the separation takes place by means of two rotatably driven circular knives (15, 16) of the separating device (14), which knives are arranged at a distance from each other on mutually opposing sides of the transport path in order to form a gap S and are controlled,
**characterized in that** the two circular knives (15, 16) are each pivoted during the separating incision by means of pneumatic and/or servomotor-controlled actuating mechanisms about an axis I, II that differs from the horizontal orientation, wherein the axes I, II are oriented in such a way that, by pivoting the circular knives (15, 16) about the axes I and II, the point P of the smallest gap size between the circular knives (15, 16) is positioned differently from the lowest knife point M of the two circular knives (15, 16).

10. Method according to claim 9, **characterized in that** the point P of the smallest gap size is positioned differently during transport of the fish through the two circular knives (15, 16).

11. Method according to claim 9 or 10, **characterized in that** the entire separating or dorsal incision from the tail fin up to the head region of the fish (11) is performed with the two circular knives (15, 16), wherein for introducing the fish (11) between the circular knives (15, 16) said two circular knives (15, 16) have the point P of the smallest gap size approximately at the lowest knife point M and this point P of the smallest gap size travels out of the lowest knife point M by pivoting.

12. Method according to one or more of claims 9 to 11, **characterized in that** the dorsal spokes are cut free with the two circular knives (15, 16), wherein the circular knives (15, 16) are controlled or pivoted in such a manner that the point P of the smallest gap size is located, at least in the region between the tail fin and the dorsal fin, immediately above the tips of the dorsal spokes.

13. Method according to one or more of claims 9 to 12, **characterized in that** only the circular knives (15, 16) themselves are pivoted about the axes I, II to change the position of the point P of the smallest gap size.

14. Method according to one or more of claims 9 to 12, **characterized in that** the entire units, each comprising a drive and a circular knife (15, 16), are each pivoted about the axes I, II to change the position of the point P of the smallest gap size.

15. Method according to one or more of claims 9 to 14, **characterized in that** fish-size-relevant data are detected and/or determined using a measuring means (13), and during the separating incision the two circular knives (15, 16) are controlled dependent on the detected and/or determined measuring data, namely pivoted about the axis I, II that differs from a horizontal orientation by means of pneumatic and/or servomotor-controlled actuating mechanisms.

16. Method according to one or more of claims 9 to 15, **characterized in that** the two circular knives (15, 16) are controlled dependent on determined fish-size-relevant data and by the fish itself.

## Revendications

1. Appareil (10) destiné à extraire automatiquement de la chair de poissons étêtés et éviscérés (11), comprenant un dispositif de transport (12) destiné à transporter les poissons (11), queue la première, dans une direction de transport horizontale T le long d'un trajet de transport, ainsi qu'un dispositif de séparation (14) destiné à séparer la chair de la structure d'arêtes, dans lequel le dispositif de séparation (14) présente au moins deux lames circulaires (15, 16) pouvant être commandées et entraînées en rotation, qui sont agencées à distance l'une de l'autre sur des côtés mutuellement opposés du trajet de transport pour former une fente S, **caractérisé en ce que** les deux lames circulaires (15, 16) sont conçues chacune de manière à pouvoir pivoter autour d'un axe I, II qui diffère d'une orientation horizontale, dans lequel les axes I, II sont orientés de telle façon que, en pivotant les lames circulaires (15, 16) autour des axes I et II, le point P de la plus petite dimension de fente entre les lames circulaires (15, 16) peut être positionné différemment par rapport au point de lame M le plus bas des deux lames circulaires (15, 16), dans lequel les deux lames circulaires (15, 16) sont conçues et configurées pour pivoter autour des axes I, II pendant le fonctionnement de l'appareil (10), donc pendant l'extraction de la chair, et dans lequel un mécanisme d'actionnement pneumatique et/ou asservi à un servomoteur est associé aux lames circulaires (15, 16) pour exécuter le déplacement d'ajustage ou de pivotement autour des axes I, II.

2. Appareil selon la revendication 1, **caractérisé en ce que** les deux lames circulaires (15, 16) sont agencées au-dessus du dispositif de transport (12) et sont conçues et configurées pour exécuter toute la coupe dorsale.

3. Appareil selon la revendication 1 ou 2, **caractérisé en ce que** les deux lames circulaires (15, 16) sont conçues et configurées pour couper et dégager les épines dorsales.

4. Appareil selon l'une ou plusieurs des revendications 1 à 3, **caractérisé en ce que** les axes I et II sont orientés sous un angle entre 0° et 10°, et en particulier entre 0° et 6°, par rapport à l'orientation verticale.

5. Appareil selon l'une ou plusieurs des revendications 1 à 4, **caractérisé en ce que** seules les lames circulaires (15, 16) sont conçues et configurées chacune pour pouvoir pivoter elles-mêmes autour de l'axe I, II.

6. Appareil selon l'une ou plusieurs des revendications 1 à 4, **caractérisé en ce que** toutes les unités comprenant chacune un entraînement et une lame circulaire (15, 16) sont conçues et configurées pour pivoter dans chaque cas autour de l'axe I, II.

7. Appareil selon l'une ou plusieurs des revendications 1 à 6, **caractérisé en ce que** l'appareil comprend des moyens de mesure (13) destinés à détecter et/ou à déterminer des données importantes en termes de taille de poisson, de telle façon que les deux lames circulaires (15, 16) peuvent être commandées en fonction des données de mesure détectées et/ou déterminées, notamment être pivotées dans chaque cas autour de l'axe I, II qui diffère d'une orientation horizontale.

8. Appareil selon l'une ou plusieurs des revendications 1 à 7, **caractérisé en ce que** les deux lames circulaires (15, 16) sont conçues de manière à pouvoir être déplacées librement au moins en partie de telle façon qu'elles peuvent être commandées au moins en partie par le poisson lui-même qu'il s'agit de traiter.

9. Procédé d'extraction automatique de chair de poissons étêtés et éviscérés (11), comprenant les étapes consistant à :
- transporter les poissons (11), queue la première, dans une direction de transport horizontale T le long d'un trajet de transport au moyen d'un dispositif de transport (12), et
- séparer la chair de la structure d'arêtes au moyen d'un dispositif de séparation (14), dans lequel la séparation s'effectue par deux lames circulaires (15, 16) du dispositif de séparation (14), entraînées en rotation, qui sont agencées à distance l'une de l'autre sur des côtés mutuellement opposés du trajet de transport pour former une fente S et qui sont commandées,
**caractérisé en ce que** les deux lames circulaires (15, 16), pendant la coupe de séparation au moyen de mécanismes d'actionnement pneumatiques et/ou asservis à un servomoteur, sont pivotées dans chaque cas autour d'un axe I, II qui diffère d'une orientation horizontale, dans lequel les axes I, II sont orientés de telle façon que, en pivotant les lames circulaires (15, 16) autour des axes I et II, le point P de la plus petite dimension de fente entre les lames circulaires (15, 16) peut être positionné différemment par rapport au point de lame M le plus bas des deux lames circulaires (15, 16).

10. Procédé selon la revendication 9, **caractérisé en ce que** le point P de la plus petite dimension de fente peut être positionné différemment par les deux lames circulaires (15, 16) pendant le transport des poissons.

11. Procédé selon la revendication 9 ou 10, **caractérisé en ce que** toute la coupe de séparation ou coupe dorsale, depuis la nageoire de la queue jusqu'à la zone de tête du poisson (11), est exécutée avec les deux lames circulaires (15, 16), dans lequel les deux lames circulaires (15, 16), pour introduire le poisson (11) entre lesdites lames circulaires (15, 16), ont le point P de la plus petite dimension de fente approximativement au niveau du point de lame M le plus bas, et ce point P de la plus petite dimension de fente se déplace vers l'extérieur en pivotant hors du point de lame M le plus bas.

12. Procédé selon l'une ou plusieurs des revendications 9 à 11, **caractérisé en ce que** les épines dorsales sont coupées et dégagées avec les deux lames circulaires (15, 16), dans lequel les lames circulaires (15, 16) sont commandées ou pivotées de telle façon que le point P de la plus petite dimension de fente se trouve au moins dans la zone entre la nageoire de la queue et la nageoire dorsale immédiatement au-dessus des pointes des épines dorsales.

13. Procédé selon l'une ou plusieurs des revendications 9 à 12, **caractérisé en ce que** seules les lames circulaires (15, 16) sont pivotées elles-mêmes autour des axes I, II pour modifier la position du point P de la plus petite dimension de fente.

14. Procédé selon l'une ou plusieurs des revendications 9 à 12, **caractérisé en ce que** toutes les unités comprenant chacune un entraînement et une lame circulaire (15, 16) sont pivotées pour modifier la position du point P de la plus petite dimension de fente autour des axes I, II.

15. Procédé selon l'une ou plusieurs des revendications 9 à 14, **caractérisé en ce que** des données importantes en termes de taille de poisson sont détectées et/ou déterminées par un moyen de mesure (13), et **en ce que** les deux lames circulaires (15, 16) sont commandées, notamment pivotées, pendant la coupe de séparation en fonction des données de mesure détectées et/ou déterminées au moyen de mécanismes d'actionnement pneumatiques et/ou asservis à un servomoteur, dans chaque cas autour de l'axe I, II qui diffère d'une orientation horizontale.

16. Procédé selon l'une ou plusieurs des revendications 9 à 15, **caractérisé en ce que** les deux lames circulaires (15, 16) sont commandées en fonction de données de mesure déterminées importantes en termes de taille de poisson et par le poisson lui-même.
